# FASCICULE DE BREVET EUROPEEN

(11) **EP 3 841 308 B1**
(45) Date de publication et mention de la délivrance du brevet: **09.11.2022**
(21) Numéro de dépôt: 19753157.7
(22) Date de dépôt: 09.07.2019
(51) Int. Cl.: F16C 33/78, F16J 15/3268

(54) **DISPOSITIF ET PROCÉDÉ DE MONTAGE D'UN JOINT DYNAMIQUE À L'INTÉRIEUR D'UN PALIER RECEVANT UN ARBRE TOURNANT**
VORRICHTUNG UND VERFAHREN ZUR MONTAGE EINER DYNAMISCHEN DICHTUNG IN EINEM EINE DREHWELLE AUFNEHMENDEN LAGER
DEVICE AND METHOD FOR MOUNTING A DYNAMIC SEAL WITHIN A BEARING RECEIVING A ROTATING SHAFT

(30) Priorité: 24.08.2018 FR 1857645
(43) Date de publication de la demande: 30.06.2021
(73) Titulaire: PSA Automobiles SA, 78300 Poissy (FR)
(72) Inventeur: TEIXEIRA, Daniel, 95330 DOMONT (FR); GONCALVES ALVES, Antonio, 78711 MANTES LA VILLE (FR)
(86) Numéro de dépôt international: PCT/FR2019/051717
(87) Numéro de publication internationale: WO 2020/039131

(56) Documents cités:
- EP-A1- 2 515 012
- EP-A2- 1 267 095
- BE-A- 494 855
- CN-A- 101 839 346
- FR-A1- 3 021 887
- JP-A- 2011 085 211

## Description

L'invention relève des modalités d'installation d'un joint dynamique à l'intérieur d'un boîtier recevant un arbre tournant. Plus spécifiquement, l'invention concerne les modalités de positionnement axial du joint à l'intérieur du boîtier, en interposition radiale entre le boîtier et l'arbre tournant. A titre indicatif, une application de l'invention concerne l'étanchéité entre un arbre moteur d'une machine motrice et un boîtier d'une boîte à variation de vitesses.

D'une manière générale, un arbre tournant s'étend axialement à travers au moins un palier ménagé à l'intérieur d'un boîtier. Le palier loge au moins un organe de roulement axialement traversé par l'arbre tournant, et le boîtier loge au moins un joint dynamique pour procurer une étanchéité entre le boîtier et l'environnement extérieur. Le joint est alors axialement positionné à l'intérieur du boîtier en interposition radiale entre le boîtier et l'arbre tournant.

Dans le cadre de l'invention, il est considéré le cas courant selon lequel l'arbre tournant traverse un palier qui est ménagé en entrée du boîtier suivant le sens d'introduction axiale de l'arbre tournant depuis l'extérieur vers l'intérieur du boîtier. L'arbre est alors introduit à travers une ouverture d'entrée du boîtier, qui est disposée en amont de l'organe de roulement suivant le sens d'introduction de l'arbre à l'intérieur du palier.

Classiquement dans ce cas, au moins un joint à lèvre(s) est radialement interposé entre le boîtier et l'arbre tournant en étant axialement disposé entre l'ouverture et l'organe de roulement. Le joint fait ainsi obstacle d'une part à l'introduction de particules depuis l'extérieur vers l'intérieur du boîtier et d'autre part à une échappée de lubrifiant hors du boîtier. Le joint est toutefois soumis à usure par suite de son frottement contre l'arbre tournant, ce qui nécessite son remplacement pour éviter une fuite de lubrifiant hors du boîtier.

Cependant, le positionnement axial du joint de remplacement peut être délicat à réaliser en deuxième monte. En effet, il est fréquent qu'un joint initial installé en première monte à l'intérieur du boîtier soit réalisée en usine au moyen d'un outillage spécifique, qui est calibré pour positionner rigoureusement le joint initial à l'intérieur du boîtier en une position axiale prédéfinie entre l'ouverture et l'organe de roulement. Lors d'une opération de remplacement du joint initial après usure, l'opérateur peut ne pas disposer dudit outillage spécifique, qui est coûteux, pour installer en deuxième monte un joint de remplacement à l'intérieur du boîtier. Le positionnement axial du joint de remplacement par l'opérateur est alors effectué au jugé, au risque d'affecter son positionnement axial correct à l'intérieur du boîtier.

Pour éviter un positionnement axial incorrect du joint de remplacement, une solution courante est de former dans le boîtier un talon ménageant un épaulement de positionnement axial du joint. Ceci permet à un opérateur ne disposant pas dudit outillage spécifique, d'installer en deuxième monte le joint de remplacement en position axiale correcte, en le poussant à travers l'ouverture d'entrée du palier jusqu'à son application en appui axial contre le talon. Cependant une telle solution peut ne pas être applicable, en raison notamment de l'encombrement axial induit par la formation du talon à l'intérieur du boîtier et/ou par un écart axial prédéfini entre le joint et l'organe de roulement pour éviter leur frottement l'un contre l'autre. Une telle situation se présente notamment lorsque l'encombrement du boîtier doit être au mieux réduit, tel que par exemple pour un boîtier d'une boîte à variation de vitesses équipant un véhicule automobile en étant couramment installée dans un environnement encombré.

Il est par exemple connu du document CN101839346-A (WEI HU et al.), de positionner axialement un joint en différentes positions à l'intérieur d'un boîtier, au moyen d'un jeu de cales d'extensions axiales respectives. Les cales sont interposées axialement entre un disque et la paroi extérieure du boîtier sur laquelle le disque est fixé, et/ou entre l'extrémité axiale d'un manchon périphérique entourant le joint et un talon du boîtier, le cas échéant via une rondelle.

Par ailleurs, il est aussi constaté qu'une saignée d'usure périphérique de l'arbre tournant peut se former par suite du frottement du joint. Il en ressort un risque d'une échappée de lubrifiant hors du boîtier via ladite saignée, malgré l'installation en deuxième monte d'un joint de remplacement en position axiale correcte à l'intérieur du boîtier.

Dans ce contexte, la présente invention a pour objet un dispositif comprenant un boîtier de réception d'un arbre tournant et un joint dynamique, et facilitant le positionnement axial du joint dynamique à l'intérieur du boîtier. L'invention a aussi pour objet un procédé de montage d'un joint dynamique à l'intérieur d'un dit dispositif.

Un but de l'invention est de proposer une solution procurant un positionnement axial rigoureux du joint dynamique à l'intérieur du boîtier, que ce soit un joint initial installé en première monte à l'intérieur du boîtier qu'un joint de remplacement installé en deuxième monte à l'intérieur du boîtier.

Un autre but de l'invention est de proposer une telle solution pouvant être mise en œuvre à moindres coûts, tant structurellement qu'au regard de l'installation en deuxième monte d'un joint de remplacement à l'intérieur du boîtier, après usure d'un joint initial installé en première monte à l'intérieur du boîtier via un outillage spécifique. Il est notamment visé la recherche d'une solution qui soit économiquement viable et même avantageuse, permettant notamment son application dans le domaine automobile relevant d'une concurrence économique notoirement sévère.

Un autre but de l'invention est de proposer une telle solution qui évite un accroissement significatif de l'extension axiale d'un dit boîtier dont l'encombrement axial est prédéfini. Il est notamment visé de ne pas modifier l'extension axiale du boîtier ni son architecture, pour permettre son installation dans un environnement imposé, tel que notamment sur un véhicule automobile présentant une architecture prédéfinie contraignante.

Un autre but de l'invention est de parfaire l'étanchéité obtenue via le montage d'un dit joint, que ce soit un joint initial installé à l'intérieur du boîtier en première monte qu'un joint de remplacement installé à l'intérieur du boîtier en deuxième monte après usure du joint initial.

Les buts visés par l'invention sont atteints isolément ou en combinaison par application des dispositions qui suivent.

Un dispositif conforme à l'invention est un dispositif selon la revendication 1 comprenant
- un boîtier ménageant un palier de réception d'un arbre tournant, ce palier comprenant un organe de roulement, ce boîtier comportant une ouverture d'introduction axiale de l'arbre tournant à son travers vers l'organe de roulement,
- au moins un joint dynamique positionné axialement à l'intérieur du boîtier, le boîtier logeant une rondelle axialement disposée entre ladite ouverture et l'organe de roulement, la rondelle ménageant un épaulement contre lequel ledit joint est apte à prendre axialement appui pour son positionnement axial à l'intérieur du boîtier pour assurer l'étanchéité du palier.

Dans ce contexte, l'invention est reconnaissable en ce que ledit joint est à une distance axiale en amont de la rondelle suivant un sens d'introduction de l'arbre tournant à travers l'ouverture vers l'intérieur du palier, et la rondelle est axialement interposée en contact entre l'organe de roulement et un talon ménagé par le boîtier.

La rondelle est installée à demeure à l'intérieur du boîtier, en étant alors exploitée pour former une butée pour un joint de remplacement installé en deuxième monte à l'intérieur du boîtier, lors d'une opération de maintenance visant à remplacer un joint initial usé installé à l'intérieur du boîtier en première monte. La rondelle est de préférence en acier en présentant au regard de son diamètre une faible épaisseur axiale, à titre indicatif comprise entre 1 mm (un millimètre) et 3 mm. La rondelle est issue d'un matériau différent de celui du boîtier ménageant le palier, tel que l'aluminium réputé léger, pour être notamment intégrable à une boîte à variation de vitesses d'un véhicule automobile, dont la masse est recherchée la plus faible possible.

Le positionnement axial du joint de remplacement à l'intérieur du boîtier via la rondelle, permet de conserver un même dimensionnement axial du boîtier pour le rendre compatible avec une contrainte dimensionnelle imposée du boîtier, comme par exemple pour son implantation sur une base prédéfinie d'un modèle de véhicule automobile.

La rondelle interfacée entre l'organe de roulement et le joint préserve le joint d'un contact dynamique avec l'organe de roulement, tel que notamment un contact frottant contre une bague tournante de l'organe de roulement solidaire de l'arbre tournant. Le joint peut être rigoureusement placé en position axiale à l'intérieur du boîtier sans avoir à utiliser un outillage spécifique utilisé pour monter le joint initial à l'intérieur du boîtier, notamment par poussée axiale exercée par un opérateur contre le joint à travers l'ouverture du boîtier.

Le talon ménage notamment un organe d'appui axial de l'organe de roulement suivant un sens opposé au sens d'introduction de l'arbre tournant à l'intérieur du boîtier. Autrement dit suivant le sens d'introduction de l'arbre tournant à l'intérieur du boîtier, le talon est ménagé en amont de la rondelle et en aval d'un tunnel de réception axiale du joint à l'intérieur du boîtier.

Plus particulièrement, l'organe de roulement prend axialement appui contre le talon via la rondelle, suivant un sens opposé au sens d'introduction de l'arbre tournant à travers l'ouverture vers l'intérieur du boîtier.

Selon une forme de réalisation, le joint est logé à l'intérieur d'un tunnel ménagé dans le boîtier. Le diamètre de l'évidement intérieur de la rondelle est inférieur au diamètre du tunnel, une extension diamétrale dudit épaulement étant délimitée entre l'évidement intérieur de la rondelle et une paroi du boîtier ménageant le tunnel.

Ledit au moins un joint dynamique est de préférence un joint en élastomère muni d'au moins une lèvre, dont potentiellement une lèvre en PTFE (d'après l'acronyme de PolyTétraFluoroEthylène), prenant radialement appui contre l'arbre tournant. Une telle lèvre en PTFE présente l'avantage d'être plus robuste que les lèvres souples en élastomère qui sont couramment utilisées pour réaliser une étanchéité et qui sont issues d'un matériau plus tendre que le PTFE.

L'invention a aussi pour objet un procédé de montage selon la revendication 5 d'au moins un joint dynamique à l'intérieur d'un dispositif tel que précédemment décrit.

Selon l'invention, le procédé est reconnaissable en ce que le joint dynamique est axialement introduit par un opérateur à travers l'ouverture vers l'intérieur du boîtier, en étant axialement poussé par l'opérateur jusqu'à sa prise d'appui axiale contre l'épaulement ménagé par la rondelle.

Le procédé est mis en œuvre pour installer en deuxième monte un joint de remplacement à l'intérieur du boîtier, notamment en atelier de maintenance, en remplacement d'un joint initial usé installé en première monte à l'intérieur du boîtier à distance axiale de la rondelle. Ceci permet une installation en première monte du joint initial au moyen d'un outillage spécifique configuré en organe de positionnement axial du joint initial à l'intérieur du boîtier, sans avoir à appliquer le joint initial contre la rondelle, installée à demeure dans le boîtier et dont l'usage est réservé au joint de remplacement.

Il en ressort finalement que le joint de remplacement installé à l'intérieur du boîtier en deuxième monte peut être rigoureusement positionné axialement contre l'épaulement ménagé par la rondelle, sans avoir à utiliser un dit outillage spécifique qui est plus coûteux qu'un outillage classique à tube frappé par un opérateur et apte à repousser le joint de remplacement depuis l'ouverture du boîtier jusqu'à sa mise en appui axial contre l'épaulement ménagé par la rondelle.

En outre, l'étanchéité procurée par le joint de remplacement installé à l'intérieur du boîtier en deuxième monte est obtenue fiable, y compris en cas d'une éventuelle usure périphérique de l'arbre tournant provoquée par la prise d'appui radiale du joint initial contre l'arbre tournant, monté à l'intérieur du boîtier à distance axiale de la rondelle.

Ainsi selon l'invention, le joint dynamique monté en application axiale contre ledit épaulement est un joint de remplacement installé en deuxième monte à l'intérieur du boîtier, en remplacement d'un joint initial installé en première monte à l'intérieur du boîtier à distance axiale de la rondelle, en amont de la rondelle suivant le sens d'introduction de l'arbre tournant à travers l'ouverture vers l'intérieur du boîtier.

A titre indicatif, la distance axiale de séparation entre le joint initial et la rondelle est comprise entre 0,5 mm et 20 mm.

L'invention a aussi pour objet une boîte à variation de vitesses logeant un arbre récepteur et un dispositif tel que précédemment décrit dans lequel le palier réceptionne un arbre moteur depuis l'extérieur du boîtier, ledit arbre tournant étant constitutif dudit arbre moteur. L'arbre moteur est notamment participant d'une machine motrice et est dédié à l'entraînement d'au moins un arbre récepteur logé à l'intérieur de la boîte à variation de vitesses.

L'invention a aussi pour objet un véhicule automobile équipé d'au moins une machine motrice propulsive du véhicule qui est pourvue d'un arbre moteur d'entraînement d'un arbre récepteur logé à l'intérieur d'une boîte à variation de vitesses équipant le véhicule qui est conforme à la boîte à variation de vitesses de l'invention.

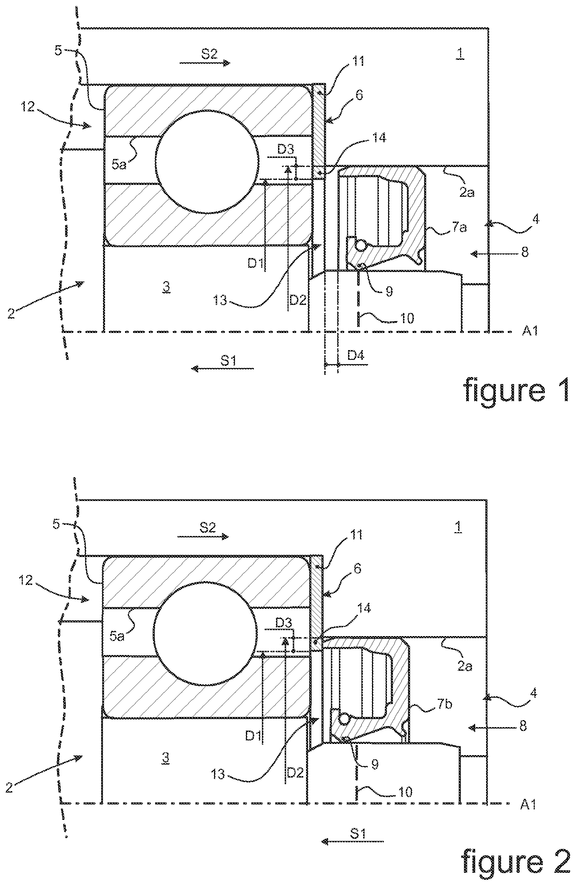

Un exemple de réalisation de l'invention va être décrit en relation avec les figures de la planche annexée, dans laquelle la figure 1 et la figure 2 sont des illustrations en demi-coupe axiale d'un même dispositif comprenant un joint dynamique et un boîtier ménageant un palier de réception d'un arbre tournant, selon un exemple de réalisation de l'invention. Sur la figure 1, le joint est un joint initial installé en première monte à l'intérieur du boîtier et sur la figure 2 le joint est un joint de remplacement installé en deuxième monte à l'intérieur du boîtier en remplacement du joint initial après son usure.

Les figures et leurs descriptions détaillées d'un exemple de réalisation de l'invention peuvent servir à mieux la définir, si besoin en relation avec la description générale qui vient d'en être faite.

Sur les figures 1 et 2, un boîtier 1 ménage un palier 2 de réception d'un arbre tournant 3 d'extension axiale A1. L'arbre tournant 3 est introduit depuis l'extérieur du boîtier 1 vers l'intérieur du palier 2 à travers une ouverture 4 que comporte le boîtier 1. Le palier 2 comprend un organe de roulement 5 traversé par l'arbre tournant 3, tel qu'un roulement à billes sur l'exemple illustré, en étant placé en appui axial contre un talon 6 formé à l'intérieur du boîtier 1. L'organe de roulement 5 est axialement appliqué contre le talon 6 suivant un sens S2 axialement opposé au sens S1 d'introduction de l'arbre tournant 3 à l'intérieur du boîtier 1.

Le boîtier 1 loge sélectivement des joints 7a, 7b dynamique identiques d'étanchéité, pour faire obstacle à une échappée de lubrifiant hors du boîtier 1 et/ou à une introduction de particules depuis l'extérieur vers l'intérieur du boîtier 1. L'un ou l'autre des joints 7a, 7b est diamétralement logé à l'intérieur d'un tunnel 8 axial formé à l'intérieur du boîtier 1 et comporte une lèvre 9 placée en appui radial contre la périphérie de l'arbre tournant 3. L'un ou l'autre des joints 7a, 7b est axialement disposé en interposition entre l'ouverture 4 et l'organe de roulement 5.

Sur la figure 1, un joint 7a initial est installé en première monte à l'intérieur du boîtier 1 lors de l'aménagement du boîtier 1 en atelier de production. Il est fréquent qu'en atelier de production, un outillage spécifique soit utilisé pour faciliter le montage du joint 7a initial à l'intérieur du boîtier 1, notamment sur une chaîne de production et/ou d'aménagement du boîtier 1 potentiellement automatisée. Un tel type d'outillage permet d'installer le joint 7a initial à l'intérieur du boîtier 1 en une position axiale prédéfinie par l'outillage, à distance axiale de l'organe de roulement 5.

Il se pose le problème du remplacement après usure du joint 7a initial représenté sur la figure 1 par un joint 7b de remplacement représenté sur la figure 2, qui est installé en deuxième monte à l'intérieur du boîtier 1 en remplacement du joint initial 7a. L'installation du joint 7b de remplacement à l'intérieur du boîtier 1 est couramment effectuée en atelier de maintenance, par un opérateur qui peut ne pas disposer dudit outillage spécifique.

Un autre problème posé est la présence potentielle d'un sillon 10 gravé en périphérie de l'arbre tournant 3, par suite du frottement du joint 7a initial autour de l'arbre tournant 3 via la lèvre 9 qu'il comporte. Un tel sillon 10 induit un risque de perte d'efficacité de l'étanchéité obtenue au moyen du joint 7b de remplacement, dans le cas où celui-ci est installé à l'intérieur du boîtier 1 en lieu et place du joint 7a initial.

Un autre problème posé relève d'une contrainte de limitation de l'encombrement du boîtier 1, tel que dans le cas de son installation sur un véhicule automobile dont l'architecture et/ou les aménagements d'espace sont prédéfinis. Une telle contrainte ne permet pas un accroissement significatif de l'extension axiale du boîtier 1, ce qui rend délicate la formation d'une butée axiale à l'intérieur du boîtier 1 en interposition axiale entre le joint 7b de remplacement et l'organe de roulement 5, pour éviter leur contact l'un contre l'autre.

Pour obvier à ces inconvénients, il est mis à profit le talon 6 contre lequel l'organe de roulement 5 prend axialement appui pour recevoir un organe de positionnement axial du joint 7b de remplacement. Ledit organe de positionnement est formé d'une rondelle 11 qui est axialement interposée en contact entre d'une part une bague extérieure 5a de l'organe de roulement 5 montée fixe à l'intérieur du boîtier 1, et d'autre part le talon 6 de prise d'appui axiale de l'organe de roulement 5 via ladite bague fixe 5a. Le joint 7b de remplacement est appliqué contre la rondelle 11 lors de son montage à l'intérieur du boîtier 1, en évitant tout contact avec l'organe de roulement 5.

Ainsi successivement d'amont en aval suivant le sens S1 d'introduction axiale de l'arbre tournant 3 à travers le boîtier 1, le dispositif comporte ladite ouverture 4 d'introduction de l'arbre tournant 3 à son travers, puis le joint 7a initial ou le joint 7b de remplacement, puis la rondelle 11 centrée à sa périphérie à l'intérieur d'un logement 12 de réception de l'organe de roulement 5, puis l'organe de roulement 5 prenant axialement appui contre le talon 6 via la rondelle 11.

Le diamètre D1 de l'évidement 13 intérieur de la rondelle 11 est inférieur au diamètre D2 du tunnel 8 recevant le joint 7a initial ou le joint 7b de remplacement. La rondelle 11 ménage ainsi un épaulement 14 contre lequel le joint 7b de remplacement prend axialement appui pour son positionnement axial à l'intérieur du boîtier 1, comme illustré sur la figure 2. L'extension diamétrale D3 de l'épaulement 14 est délimitée entre l'évidement 13 intérieur de la rondelle 11 et la paroi 2a du boîtier 1 délimitant le tunnel 8.

Sur la figure 1, le joint 7a initial est placé à une distance D4 axiale de la rondelle 11, à titre indicatif comprise entre 0,5 mm et 20 mm. Le joint 7b de remplacement étant identique au joint 7a initial et étant positionné à l'intérieur du boîtier 1 en appui axial contre l'épaulement 14 ménagé par la rondelle 11, un éventuel sillon 10 gravé en périphérie de l'arbre tournant 3 par le joint 7a initial n'affecte pas la qualité de l'étanchéité obtenue via la joint 7b de remplacement.

La solution proposée par l'invention est mise en œuvre à moindres coûts à partir :
- ) de l'utilisation d'une rondelle 11 à l'intérieur du boîtier 1 pour positionner le joint 7b de remplacement à l'intérieur du boîtier 1. La rondelle 11 est installée à demeure à l'intérieur du boîtier 1 en atelier de production et d'aménagement du boîtier 1, et ne nécessite aucune intervention après son installation pour le montage du joint 7b de remplacement, et
- ) de l'exonération pour un opérateur de maintenance remplaçant le joint 7a initial d'avoir à se procurer l'outillage spécifique utilisé pour installer le joint 7a initial à l'intérieur du boîtier 1.
- ) du respect de l'extension axiale du boîtier 1 selon une configuration du boîtier 1 imposée, permettant son implantation dans un environnement préexistant, notamment sur une base d'un modèle de véhicule existant sans avoir à modifier ladite base de véhicule et/ou son aménagement par suite de l'application de l'invention.

## Revendications

1. Dispositif comprenant :
- un boîtier (1) ménageant un palier (2) de réception d'un arbre tournant (3), ce palier (2) comprenant un organe de roulement (5), ce boîtier comportant une ouverture (4) d'introduction axiale (A1) de l'arbre tournant (3) à son travers vers l'organe de roulement (5)
- au moins un joint (7a) dynamique positionné axialement à l'intérieur du boîtier (1),
le boîtier (1) logeant une rondelle (11) axialement (A1) disposée entre ladite ouverture (4) et l'organe de roulement (5), la rondelle (11) ménageant un épaulement (14) contre lequel ledit joint (7a) est apte à prendre axialement (A1) appui pour son positionnement axial (A1) à l'intérieur du boîtier (1) pour assurer l'étanchéité du palier (2), **caractérisé en ce que** ledit joint (7a) est à une distance axiale (D4) en amont de la rondelle (11) suivant un sens (S1) d'introduction de l'arbre tournant (3) à travers l'ouverture (4) vers l'intérieur du palier (2), et la rondelle (11) est axialement (A1) interposée en contact entre l'organe de roulement (5) et un talon (6) ménagé par le boîtier (1).

2. - Dispositif selon la revendication 1, **caractérisé en ce que** l'organe de roulement (5) prend axialement (A1) appui contre le talon (6) via la rondelle (11), suivant un sens (S2) opposé au sens (S1) d'introduction de l'arbre tournant (3) à travers l'ouverture (4) vers l'intérieur du boîtier (1).

3. - Dispositif selon l'une quelconque des revendications 1 à 2, **caractérisé en ce que** le joint (7a) est logé à l'intérieur d'un tunnel (8) ménagé dans le boîtier (1), le diamètre (D1) de l'évidement (13) intérieur de la rondelle (11) étant inférieur au diamètre (D2) du tunnel (8), une extension diamétrale (D3) dudit épaulement (14) étant délimitée entre l'évidement (13) intérieur de la rondelle (11) et une paroi (2a) du boîtier (1) ménageant le tunnel (8).

4. - Dispositif selon l'une quelconque des revendications 1 à 3, **caractérisé en ce que** ledit au moins un joint (7a, 7b) dynamique est un joint en élastomère muni d'au moins une lèvre, dont au moins une lèvre en PTFE (9), prenant radialement appui contre l'arbre tournant (3).

5. - Procédé de montage d'au moins un joint (7a, 7b) dynamique à l'intérieur d'un dispositif selon l'une quelconque des revendications 1 à 4, **caractérisé en ce que** le joint (7b) dynamique est axialement (A1) introduit par un opérateur à travers l'ouverture (4) vers l'intérieur du boîtier (1), en étant axialement poussé par l'opérateur jusqu'à sa prise d'appui axiale contre l'épaulement (14) ménagé par la rondelle (11), ce joint (7b) dynamique monté en application axiale contre ledit épaulement (14) étant un joint (7b) de remplacement installé en deuxième monte à l'intérieur du boîtier (1), en remplacement d'un joint (7a) initial installé en première monte à l'intérieur du boîtier (1) à distance axiale de la rondelle (11), en amont de la rondelle (11) suivant le sens (S1) d'introduction de l'arbre tournant (3) à travers l'ouverture (4) vers l'intérieur du boîtier (1).

6. -Procédé selon la revendication 5, **caractérisé en ce que** la distance axiale de séparation entre le joint (7a) initial et la rondelle (11) est comprise entre 0,5 mm et 20 mm.

7. - Boîte à variation de vitesses logeant un arbre récepteur et un dispositif selon l'une des revendications 1 à 4 dans lequel le palier (2) réceptionne un arbre moteur depuis l'extérieur du boîtier (1), ledit arbre tournant (3) étant constitutif dudit arbre moteur.

8. - Véhicule automobile équipé d'au moins une machine motrice propulsive du véhicule qui est pourvue d'un arbre moteur d'entraînement d'un arbre récepteur logé à l'intérieur d'une boîte à variation de vitesses équipant le véhicule, **caractérisé en ce que** ladite boîte à variation de vitesses est conforme à la revendication 7.

## Patentansprüche

1. Vorrichtung umfassend :
- ein Gehäuse (1), das ein Lager (2) zur Aufnahme einer rotierenden Welle (3) bereitstellt, wobei dieses Lager (2) ein Wälzelement (5) umfasst, wobei dieses Gehäuse eine Öffnung (4) zur axialen Einführung (A1) der rotierenden Welle (3) durch sie hindurch in Richtung des Wälzkörpers (5)
- mindestens eine dynamische Dichtung (7a), die axial innerhalb des Gehäuses (1) angeordnet ist, wobei
das Gehäuse (1) eine Unterlegscheibe (11) axial (A1), die zwischen der Öffnung (4) und dem Wälzkörper (5) angeordnet ist, wobei die Unterlegscheibe (11) eine Schulter (14) bereitstellt, gegen die die Dichtung (7a) geeignet ist, eine axiale (A1) Abstützung für ihre axiale Positionierung (A1) zu übernehmen. innerhalb des Gehäuses (1), um die Abdichtung des Lagers (2) sicherzustellen, **dadurch gekennzeichnet, dass** die Dichtung (7a) in einem axialen Abstand (D4) stromaufwärts von der Unterlegscheibe (11) in einer Einführrichtung (S1) angeordnet ist die rotierende Welle (3) durch die Öffnung (4) zur Innenseite des Lagers (2) führt und die Unterlegscheibe (11) axial (A1) bei eingefügt ist Kontakt zwischen dem Fahrwerk (5) und einem vom Gehäuse (1) bereitgestellten Absatz (6).

2. - Vorrichtung nach Anspruch 1, **dadurch gekennzeichnet, dass** das Rollelement (5) axial (A1) gegen den Absatz (6) über die Unterlegscheibe (11) anliegt, in einer Richtung (S2) entgegengesetzt zu der Richtung (S1) für Einführen der rotierenden Welle (3) durch die Öffnung (4) zum Inneren des Gehäuses (1).

3. - Vorrichtung nach einem der Ansprüche 1 bis 2, **dadurch gekennzeichnet, dass** die Dichtung (7a) in einem im Gehäuse (1) ausgebildeten Tunnel (8) untergebracht ist, dessen Durchmesser (D1) der inneren Aussparung (13) entspricht der Unterlegscheibe (11) kleiner ist als der Durchmesser (D2) des Tunnels (8), wobei eine diametrale Verlängerung (D3) der Schulter (14) zwischen der inneren Aussparung (13) der Unterlegscheibe (11) und begrenzt ist eine Wand (2a) des Gehäuses (1), die den Tunnel (8) bildet.

4. - Vorrichtung nach einem der Ansprüche 1 bis 3, **dadurch gekennzeichnet, dass** die mindestens eine dynamische Dichtung (7a, 7b) eine Elastomerdichtung ist, die mit mindestens einer Lippe versehen ist, die mindestens eine PTFE-Lippe (9) trägt radial gegen die rotierende Welle (3).

5. - Verfahren zum Montieren mindestens eines dynamischen Gelenks (7a, 7b) innerhalb einer Vorrichtung nach einem der Ansprüche 1 bis 4, **dadurch gekennzeichnet, dass** das dynamische Gelenk (7b) axial (A1) von einem Bediener durch das eingeführt wird Öffnung (4) in Richtung der Innenseite des Gehäuses (1), axial von der Bedienungsperson gedrückt, bis sie eine axiale Abstützung gegen die von der Unterlegscheibe (11) gebildete Schulter (14) erhält, gegen die diese dynamische Dichtung (7b) in axialer Anlage angebracht ist wobei die Schulter (14) eine Ersatzdichtung (7b) ist, die als Nachrüstsatz innerhalb des Gehäuses (1) installiert wird und eine ursprünglich als Originalausrüstung innerhalb des Gehäuses (1) in einem axialen Abstand von der Unterlegscheibe (11) installierte Dichtung (7a) ersetzt, stromaufwärts der Unterlegscheibe (11) in Richtung (S1) der Einführung der rotierenden Welle (3) durch die Öffnung (4) in das Innere des Gehäuses (1).

6. -Verfahren nach Anspruch 5, **dadurch gekennzeichnet, dass** der axiale Trennabstand zwischen der Dichtung (7a) und der Unterlegscheibe (11) zwischen 0,5 mm und 20 mm liegt.

7. - Getriebe, das eine angetriebene Welle und eine Vorrichtung nach einem der Ansprüche 1 bis 4 aufnimmt, wobei das Lager (2) eine Motorwelle von außerhalb des Gehäuses (1) aufnimmt, wobei die Drehwelle (3) die Motorwelle bildet.

8. - Kraftfahrzeug, das mit mindestens einem Antriebsmotor des Fahrzeugs ausgestattet ist, der mit einer Antriebsmotorwelle einer Aufnahmewelle versehen ist, die in einem am Fahrzeug angebrachten Getriebe mit variabler Geschwindigkeit untergebracht ist, **dadurch gekennzeichnet, dass** das Getriebe mit variabler Geschwindigkeit dem Anspruch entspricht 7.

## Claims

1. Device comprising :
- a housing (1) providing a bearing (2) for receiving a rotating shaft (3), this bearing (2) comprising a rolling member (5), this housing comprising an opening (4) axial introduction (A1) of the rotating shaft (3) through it towards the rolling member (5)
- at least one dynamic seal (7a) positioned axially inside the housing (1),
the housing (1) housing a washer (11) axially (A1) disposed between said opening (4) and the rolling member (5), the washer (11) providing a shoulder (14) against which said seal (7a) is suitable to take axially (A1) support for its axial positioning (A1) inside the casing (1) to ensure the sealing of the bearing (2), **characterized in that** the said seal (7a) is at an axial distance (D4) upstream of the washer (11) in a direction (S1) of insertion of the rotating shaft (3) through the opening (4) towards the inside of the bearing (2), and the washer (11) is axially (A1) interposed at c contact between the running gear (5) and a heel (6) provided by the housing (1).

2. - Device according to claim 1, **characterized in that** the rolling member (5) bears axially (A1) against the heel (6) via the washer (11), in a direction (S2) opposite to the direction (S1) for introducing the rotating shaft (3) through the opening (4) towards the inside of the casing (1).

3. - Device according to any one of claims 1 to 2, **characterized in that** the seal (7a) is housed inside a tunnel (8) formed in the housing (1), the diameter (D1) of the interior recess (13) of the washer (11) being smaller than the diameter (D2) of the tunnel (8), a diametral extension (D3) of the said shoulder (14) being delimited between the interior recess (13) of the washer (11) and a wall (2a) of the casing (1) forming the tunnel (8).

4. - Device according to any one of claims 1 to 3, **characterized in that** said at least one dynamic seal (7a, 7b) is an elastomeric seal provided with at least one lip, including at least one PTFE lip (9), bearing radially against the rotating shaft (3).

5. - A method of mounting at least one dynamic joint (7a, 7b) inside a device according to any one of claims 1 to 4, **characterized in that** the dynamic joint (7b) is axially (A1) introduced by an operator through the opening (4) towards the inside of the casing (1), being axially pushed by the operator until it takes axial support against the shoulder (14) formed by the washer (11), this dynamic seal (7b) mounted in axial application against the said shoulder (14) being a replacement seal (7b) installed as aftermarket inside the housing (1), replacing a seal (7a) initially installed as original equipment inside the housing (1) at an axial distance from the washer (11), upstream of the washer (11) in the direction (S1) of introduction of the rotating shaft (3) through the opening (4) to the inside of the casing (1).

6. -Process according to claim 5, **characterized in that** the axial separation distance between the seal (7a) initial and the washer (11) is between 0.5 mm and 20 mm.

7. - Gearbox housing a driven shaft and a device according to one of claims 1 to 4 wherein the bearing (2) receives a motor shaft from outside the housing (1), said rotating shaft (3) being constitutive of said motor shaft.

8. - Motor vehicle equipped with at least one propulsion engine of the vehicle which is provided with a driving motor shaft of a receiving shaft housed inside a variable speed gearbox fitted to the vehicle, **characterized in that** said variable speed gearbox is in accordance with claim 7.
